# EUROPÄISCHE PATENTSCHRIFT

(11) **EP 0 591 242 B1**
(45) Veröffentlichungstag und Bekanntmachung des Hinweises auf die Patenterteilung: **22.03.1995**
(21) Anmeldenummer: 92910703.5
(22) Anmeldetag: 02.06.1992
(51) Int. Cl.: B60T 8/48

(54) **HYDRAULISCHE BREMSANLAGE MIT BLOCKIERSCHUTZ- UND ANTRIEBSSCHLUPFREGELEINRICHTUNG, INSBESONDERE FÜR KRAFTFAHRZEUGE**
HYDRAULIC BRAKE SYSTEM WITH ANTI-LOCK AND DRIVE SLIP CONTROL DEVICE, ESPECIALLY FOR MOTOR VEHICLES
DISPOSITIF DE FREINAGE HYDRAULIQUE AVEC SYSTEME D'ANTIBLOCAGE ET D'ANTIPATINAGE A L'ACCELERATION, EN PARTICULIER POUR VEHICULES AUTOMOBILES

(30) Priorität: 29.06.1991 DE 4121602
(43) Veröffentlichungstag der Anmeldung: 13.04.1994
(73) Patentinhaber: ROBERT BOSCH GMBH, 70442 Stuttgart (DE)
(72) Erfinder: BERNHARDT, Wolfgang, D-7015 Korntal (DE); SCHMIDT, Guenther, D-7146 Tamm-Hohenstange (DE)
(86) Internationale Anmeldenummer: DE9200445
(87) Internationale Veröffentlichungsnummer: WO9300241

(56) Entgegenhaltungen:
- EP-A- 0 482 379
- DE-A- 3 816 073
- DE-A- 4 001 421
- DE-A- 4 011 329
- DE-A- 4 017 874

## Beschreibung

### Stand der Technik

Die Erfindung geht aus von einer hydraulischen Bremsanlage mit Blockierschutz- und Antriebsschlupfregeleinrichtung nach der Gattung des Patentanspruchs.

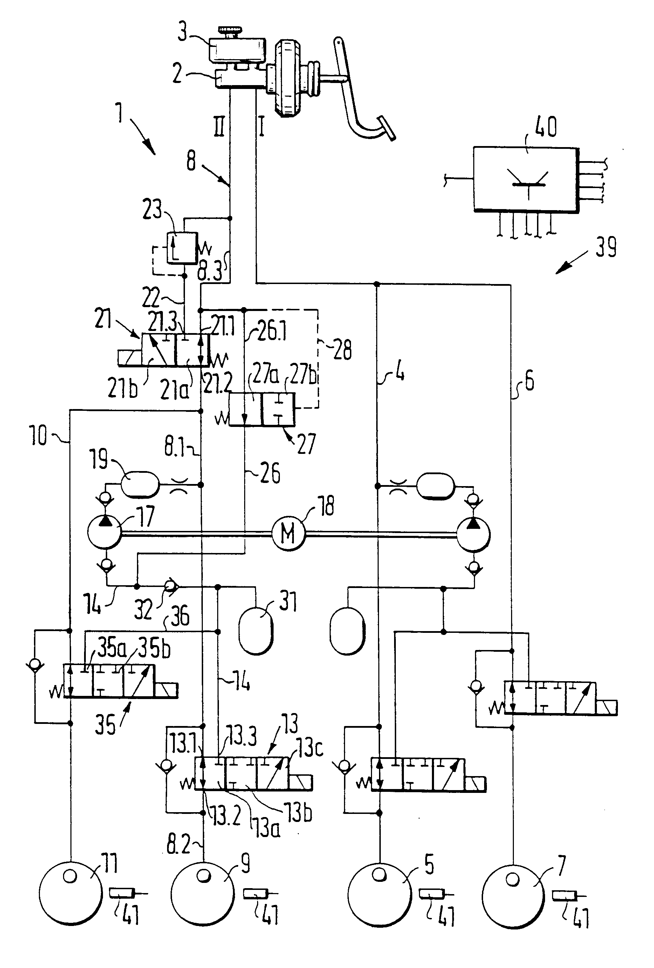

Es ist schon eine solche Bremsanlage bekannt (DE-OS 38 16 073, Figur 3), bei der in einem Bremskreis die Saugleitung von einem am Hauptbremszylinder angeordneten Vorratsbehälter für Druckmittel ausgeht. Somit handelt es sich um einen sogenannten offenen Bremskreis, in dem das Druckmittelvolumen zwischen dem Hauptbremszylinder und der Radbremse Schwankungen unterworfen ist, welche zusätzliche konstruktive Maßnahme am Hauptbremszylinder erforderlich machen. Außerdem weist die hauptbremszylinderseitig als Schlauch ausgebildete Saugleitung eine verhältnismäßig große Länge auf. Ein Schlauch ist eher Montagefehlern und Beschädigungsgefahr unterworfen als eine Rohrleitung. Ferner besteht die Gefahr, daß bei undichtem und verzögert schließendem Absperrventil in der Saugleitung Druckmittel durch die Rückführleitung in die Speicherkammer eindringt und deren Speichervolumen für den Fall mindert, daß im Blockierschutz- oder Antriebsschlupfregelbetrieb Druckmittel aus der Radbremse entnomen werden muß.

### Vorteile der Erfindung

Die erfindungsgemäße hydraulische Bremsanlage mit den kennzeichnenden Merkmalen des Patentanspruchs hat demgegenüber den Vorteil, daß der Bremskreis ein sogenannter geschlossener Bremskreis mit sowohl von der Bremsleitung ausgehender Saugleitung als auch in die Bremsleitung einmündender Überströmleitung ist. Die Saugleitung kann daher relativ kurz und als Rohrleitung oder als Gehäusebohrung ausgebildet sein. Von besonderem Vorteil ist aber der mit geringem Aufwand erzielte Schutz gegen Eindringen von Druckmittel in die Speicherkammer von der Seite der Saugleitung her. Hiermit wird die Funktionssicherheit der Bremsanlage und deren Regelverhalten im Blockierschutz- und Antriebsschlupfregelbetrieb verbessert.

### Zeichnung

Ein Ausführungsbeispiel der Erfindung ist in der Zeichnung anhand eines Schaltschemas für eine hydraulische Bremsanlage vereinfacht dargestellt und in der nachfolgenden Beschreibung näher erläutert.

### Beschreibung des Ausführungsbeispiels

Die in der Zeichnung dargestellte hydraulische Bremsanlage 1 ist zur Verwendung in Kraftfahrzeugen, insbesondere Personenkraftwagen, bestimmt.

Die Bremsanlage 1 hat einen pedalbetätigbaren, zweikreisigen Hauptbremszylinder 2 mit einem Druckmittel-Vorratsbehälter 3. In einem ersten Bremskreis I der Bremsanlage 1 verläuft eine Bremsleitung 4 zwischen dem Hauptbremszylinder 2 und einer ersten Radbremse 5. Von der Bremsleitung 4 zweigt eine Bremsleitung 6 zu einer zweiten Radbremse 7 des Bremskreises I ab. Die Radbremsen 5 und 7 sind der nicht angetriebenen Vorderachse des Fahrzeugs zugeordnet. In einem zweiten Bremskreis II der Bremsanlage 1 ist der Hauptbremszylinder 2 durch eine Bremsleitung 8 mit einer ersten Radbremse 9 verbunden. An eine von der Bremsleitung 8 abzweigende Bremsleitung 10 des Bremskreises II ist eine zweite Radbremse 11 angeschlossen. Die beiden Radbremsen 9 und 11 dieses Bremskreises II sind der angetriebenen Hinterachse des Fahrzeugs zugeordnet. Der im Zusammenhang mit der erfindungsgemäßen Lösung stehende Bremskreis II ist nachfolgend näher erläutert:

In der Bremsleitung 8 liegt radbremsseitig eine Ventilanordnung 13 für die Bremsdruckmodulation der Radbremse 9. Die Ventilanordnung 13 ist als 3/3-Wegeventil ausgebildet und weist drei Anschlüsse auf: Ein erster Anschluß 13.1 steht mit dem hauptbremszylinderseitigen Abschnitt 8.1 der Bremsleitung 8 in Verbindung, an einen zweiten Anschluß 13.2 ist der radbremsseitige Abschnitt 8.2 der Bremsleitung 8 angeschlossen, während von einem dritten Anschluß 13.3 eine Rückführleitung 14 für der Radbremse 9 entnommenes Druckmittel ausgeht. Die Ventilanordnung 13 hat eine erste, federbetätigte Stellung 13a, in der die beiden Anschlüsse 13.1 und 13.2 miteinander verbunden sind. In einer zweiten, elektromagnetisch schaltbaren Stellung 13b sind alle drei Anschlüsse 13.1, 13.2, 13.3 abgesperrt. In einer dritten, ebenfalls elektromagnetisch schaltbaren Stellung 13c sind der zweite Anschluß 13.2 und der dritte Anschluß 13.3 miteinander verbunden.

Die von der Ventilanordnung 13 ausgehende Rückführleitung 14 endet an der Saugseite einer selbstansaugenden Hochdruckpumpe 17, welche mit einem elektrischen Antriebsmotor 18 antreibbar ist. Von der Hochdruckpumpe 17 geht druckseitig eine Einspeiseleitung 19 aus, die zwischen dem Hauptbremszylinder 2 und der Ventilanordnung 13 an die Bremsleitung 8 angeschlossen ist.

Zwischen den beiden Anschlüssen der Einspeiseleitung 19 sowie der Bremsleitung 10 an die Bremsleitung 8 und dem Hauptbremszylinder 2 ist in der Bremsleitung 8 ein Umschaltventil 21 in Form eines 3/2-Wegeventils angeordnet. Das Umschaltventil 21 hat drei Anschlüsse: Ein erster Anschluß 21.1 steht mit einem hauptbremszylinderseitigen Abschnitt 8.3 der Bremsleitung 8 in Verbindung; von einem zweiten Anschluß 21.2 geht der Abschnitt 8.1 der Bremsleitung aus; an einen dritten Anschluß 21.3 des Umschaltventils 21 ist eine Überströmleitung 22 mit einem darin angeordneten Druckbegrenzungsventil 23 angeschlossen. Die Überströmleitung 22 mündet hauptbremszylinderseitig in die Bremsleitung 8. In einer ersten, federbetätigten Stellung 21a des Umschaltventils 21 sind die Anschlüsse 21.1 und 21.2 miteinander verbunden; in einer zweiten, elektromagnetbetätigbaren Stellung 21b stehen die Anschlüsse 21.2 und 21.3 miteinander in Verbindung.

Von dem Abschnitt 8.3 der Bremsleitung 8 geht zwischen dem Hauptbremszylinder 2 und dem Umschaltventil 21 eine Saugleitung 26 aus, welche in die Rückführleitung 14 mündet. In der Saugleitung 26 befindet sich ein Absperrventil 27 in Form eines 2/2-Wegeventils. Von einem hauptbremszylinderseitigen Abschnitt 26.1 der Saugleitung 26 führt eine Steuerleitung 28 zum Absperrventil 27. Das Absperrventil 27 weist eine federbetätigbare Durchlaßstellung 27a und eine vom Druck im Abschnitt 8.3 der Bremsleitung 8 zwischen dem Hauptbremszylinder 2 und dem Umschaltventil 21 schaltbare Sperrstellung 27b auf.

An die Rückführleitung 14 ist zwischen der Ventilanordnung 13 und dem Anschluß der Saugleitung 26 eine Niederdruck-Speicherkammer 31 für Druckmittel angeschlossen. Außerdem ist in der Rückführleitung 14 zwischen dem Anschluß der Saugleitung 26 und der Speicherkammer 31 ein Rückschlagventil 32 angeordnet, welches in Richtung von der Hochdruckpumpe 17 zur Ventilanordnung 13 sperrt.

Ebenso wie in der Bremsleitung 8 ist auch in der Bremsleitung 10 eine Ventilanordnung 35 für die Bremsdruckmodulation in der Radbremse 11 angeordnet. Von der in gleicher Weise ausgebildeten Ventilanordnung 35 geht ebenfalls eine Rückführleitung 36 aus, die zwischen der Ventilanordnung 13 und dem Rückschlagventil 32 in die Rückführleitung 14 mündet.

Die zwischen dem Hauptbremszylinder 2 und den Radbremsen 5, 7, 9, 11 angeordneten Elemente der Bremsanlage 1 bilden eine Blockierschutz- und Antriebsschlupfregeleinrichtung 39, zu der ein elektronisches Steuergerät 40 sowie den Fahrzeugrädern zugeordnete Raddrehzahlsensoren 41 gehören. Im Steuergerät 40 sind Signale der das Drehverhalten der Fahrzeugräder erfassenden Raddrehzahlsensoren 41 auswertbar und beim Auftreten von Blockiergefahr an wenigstens einem der Fahrzeugräder oder bei unzulässig großem Antriebsschlupf bei wenigstens einem der beiden Antriebsräder des Fahrzeugs aufgrund von im Steuergerät abgespeicherten Regelalgorithmen in Schaltsignale für den Antriebsmotor 18 sowie der diversen elektromagnetisch betätigbaren Ventile der Bremsanlage 1 umsetzbar.

Die hydraulische Bremsanlage 1 hat folgende Funktionen:
Bei einer vom Fahrer des Fahrzeugs ausgelösten Bremsung, während der die Ventile der Bremsanlage 1 die gezeichnete Stellung einnehmen, wird durch Betätigung des Hauptbremszylinders 2 in diesem Druck erzeugt und durch Verschieben von Druckmittelmengen in den Bremsleitungen 4, 6 des Bremskreises I sowie in den Bremsleitungen 8, 10 des Bremskreises II als Bremsdruck in den Radbremsen 5, 7, 9, 11 wirksam. Dabei bewirkt der in der Bremsleitung 8 zwischen dem Hauptbremszylinder 2 und dem Umschaltventil 21 herrschende Druck das Umschalten des Absperrventils 27 in die Sperrstellung 27b. Das Abströmen von Druckmittel-Teilmengen zur Hochdruckpumpe 17 ist daher unterbunden. Sollte bei einer Bremsbetätigung mit sehr steilem Druckansteig Druckmittel bis zum Schalten des Absperrventils 27 dieses durchströmen, so verhindert das Rückschlagventil 32 in der Rückführleitung 14 das Eindringen dieses Druckmittels in die Speicherkammer 31. Außerdem schützt das Rückschlagventil 32 die Speicherkammer 31 vor dem Befüllen mit Druckmittel, falls bei einer fahrerbetätigten Bremsung das Absperrventil 27 in der Durchlaßstellung 27a hängenbleibt oder undicht ist.

Droht bei einer vom Fahrer ausgelösten Bremsung beispielsweise das der Radbremse 9 zugeordnete, angetriebene Fahrzeugrad zu blockieren, so wird dies vom elektronischen Steuergerät 40 aufgrund der Signale der Raddrehzahlsensoren 41 erkannt. Das Steuergerät 40 schaltet die Ventilanordnung 13 in der Bremsleitung 8 in die Stellung 13c, so daß ein Bremsdruckabbau in der Radbremse 9 möglich ist. Dabei strömt Druckmittel aus der Radbremse 9 durch die Rückführleitung 14 in die Speicherkammer 31, aus der es von der eingeschalteten Hochdruckpumpe 17 angesaugt und in die Bremsleitung 8 eingespeist wird. An die Phase für Bremsdruckabbau schließen sich Phasen für Druckhalten und Druckaufbau in der Radbremse 9 an. Für Druckhalten schaltet das Steuergerät 40 die Ventilanordnung 13 in die Stellung 13b, für Druckaufbau wird die Ventilanordnung 13 in die Stellung 13a geschaltet. Dieser Blockierschutzregelbetrieb wird solange aufrechterhalten, bis das der Radbremse 9 zugeordnete Fahrzeugrad stabiles Drehverhalten zeigt.

Ist dagegen beim Anfahren und Beschleunigen des Fahrzeugs beispielsweise das der Radbremse 9 zugeordnete, angetriebene Fahrzeugrad unzulässig großem Antriebsschlupf unterworfen, so wird dies ebenfalls vom Steuergerät 40 aufgrund der Signale der Raddrehzahlsensoren 41 erkannt. Das Steuergerät 40 schaltet das Umschaltventil 21 in die Stellung 21b und setzt die Hochdruckpumpe 17 in Betrieb. Die Hochdruckpumpe 17 saugt durch die Saugleitung 26 und den Abschnitt 8.3 der Bremsleitung 8 aus dem Hauptbremszylinder 2 Druckmittel an und speist dieses durch die Einspeiseleitung 19 in den zwischen dem Umschaltventil 21 und der Ventilanordnung 13 verlaufenden Abschnitt 8.1 der Bremsleitung 8 ein. Während das Steuergerät 40 die Ventilanordnung 35 in die Sperrstellung 35b schaltet, wird durch die ihre Stellung 13a einnehmende Ventilanordnung 13 Bremsdruck in der Radbremse 9 aufgebaut. Während dieses Antriebsschlupfregelbetriebes schließen sich Phasen für Druckhalten und Druckabbau an, bei denen die Ventilanordnung 13 die im Blockierschutzregelbetrieb bereits erwähnten Schaltstellungen einnimmt. In einem solchen Antriebsschlupfregelbetrieb wird von der Hochdruckpumpe 17 gefördertes, jedoch nicht von der Radbremse 9 abgenommenes Druckmittel durch die Überströmleitung 22 und das beispielsweise auf einen Ansprechdruck von 100 bar eingestellte Druckbegrenzungsventil 23 in den hauptbremszylinderseitigen Abschnitt 8.3 der Bremsleitung 8 abgesteuert. Dabei ist eine eventuelle Leckage des Druckbegrenzungsventils 23 unschädlich, weil das in den Bremsleitungsabschnitt 8.3 abgegebene Druckmittel von der Hochdruckpumpe 17 wieder angesaugt und nicht dem Bremskreis II entzogen wird. Wesentlich für das günstige Regelverhalten der Bremsanlage 1 ist ferner die Tatsache, daß die gegen das Eindringen von Druckmittel von der Saugleitung 26 her durch das Rückschlagventil 32 geschützte Speicherkammer 31 zur Aufnahme von Druckmittel aus den Radbremsen in Phasen für Druckabbau uneingeschränkt zur Verfügung steht.

Leitet der Fahrer in einem solchen Antriebschlupfregelbetrieb an der Radbremse 9 durch Betätigen des Hauptbremszylinders 2 eine Bremsung ein, so wird dies vom Steuergerät 40 beispielsweise aufgrund des Signals eines nicht dargestellten Bremslichtschalters oder durch die Signale der Raddrehzahlsensoren 41 erkannt. Der Druck in der Bremsleitung 8 bewirkt das Umschalten des Absperrventils 27 in die Sperrstellung 27b, so daß die Hochdruckpumpe 17 von der Druckmittelzufuhr aus dem Hauptbremszylinder 2 abgeschnitten wird. Außerdem schaltet das Steuergerät 40 die Hochdruckpumpe 17 ab und die Ventilanordnungen 13, 35 in ihre federbetätigte Stellung 13a bzw. 35a sowie das Umschaltventil 21 in die Stellung 21a. Der vom Fahrer erzeugte Bremsdruck kann sich ebenso wie in den Radbremsen 5, 7 des Bremskreises I auch in den Radbremsen 9, 11 des Bremskreises II aufbauen.

## Patentansprüche

1. Hydraulische Bremsanlage (1) mit Blockierschutz und Antriebsschlupfregeleinrichtung (39), insbesondere für Kraftfahrzeuge, mit den Merkmalen:
- zwischen einem Hauptbremszylinder (2) und wenigstens einer Radbremse (z. B. 9) eines Bremskreises (II) verläuft eine Bremsleitung (8), in der eine Ventilanordnung (13) für die Bremsdruckmodulation in der Radbremse liegt,
- von der Ventilanordnung (13) geht eine Rückführleitung (14) für der Radbremse (9) entnommenes Druckmittel zur Saugseite einer Hochdruckpumpe (17) aus, die druckseitig mit einer Einspeiseleitung (19) zwischen dem Hauptbremszylinder (2) und der Ventilanordnung (13) an die Bremsleitung (8) angeschlossen ist,
- in der Bremsleitung (8) ist zwischen dem Anschluß der Einspeiseleitung (19) und dem Hauptbremszylinder (2) ein Umschaltventil (21) angeordnet, von dem eine hauptbremszylinderseitig in die Bremsleitung (8) mündende Überströmleitung (22) mit einem Druckbegrenzungsventil (23) ausgeht,
- an die Rückführleitung (14) ist eine Saugleitung (26) für Druckmittel mit einem vom Druck in der Bremsleitung (8) zwischen dem Hauptbremszylinder (2) und dem Umschaltventil (21) schaltbaren Absperrventil (27) angeschlossen,
- die Rückführleitung (14) ist zwischen der Ventilanordnung (13) und dem Anschluß der Saugleitung (26) mit einer Speicherkammer (31) für Druckmittel verbunden,
gekennzeichnet durch die folgenden Merkmale:
- die Saugleitung (26) geht von der Bremsleitung (8) zwischen dem Hauptbremszylinder (2) und dem Umschaltventil (21) aus,
- in der Rückführleitung (14) ist zwischen dem Anschluß der Saugleitung (26) und der Speicherkammer (31) ein Rückschlagventil (32) angeordnet.

## Claims

1. Hydraulic brake system (1) with anti-lock and drive slip control device (39), in particular for motor vehicles, with the features:
- a brake line (8) in which a valve arrangement (13) for the brake pressure modulation in the wheel brake is located runs between a main brake cylinder (2) and at least one wheel brake (e.g. 9) of a brake circuit (II),
- a return line (14) for pressure medium removed from the wheel brake (9) leads from the valve arrangement (13) to the intake side of a high-pressure pump (17) which is connected on the output side to the brake line (8) with a feed line (19) between the main brake cylinder (2) and the valve arrangement (13),
- a changeover valve (21) is arranged in the brake line (8) between the connection of the feed line (19) and the main brake cylinder (2), from which changeover valve (21) an overflow line (22) which leads into the brake line (8) on the main brake cylinder-side and has a pressure-limiting valve (23) starts,
- an extractor line (26) for pressure medium with a shut-off valve (27) which can be switched between the main brake cylinder (2) and the changeover valve (21) by the pressure in the brake line (8) is connected to the return line (14),
- the return line (14) is connected between the valve arrangement (13) and the connection of the extractor line (26) to a storage chamber (31) for pressure medium, characterized by the following features:
- the extractor line (26) starts from the brake line (8) between the main brake cylinder (2) and the changeover valve (21),
- a non-return valve (32) is arranged in the return line (14) between the connection of the extractor line (26) and the storage chamber (31).

## Revendications

1. Dispositif de freinage hydraulique (1) comportant une installation d'antiblocage et d'antipatinage à l'accélération (39), notamment pour des véhicules automobiles ayant les caractéristiques suivantes :
- entre un maître-cylindre (2) et au moins un frein de roue (par exemple 9) d'un circuit de freins (II) il y a une conduite de frein (8) munie d'un bloc-vannes (13) pour moduler la pression de frein dans le frein de roue,
- une conduite de retour (14) relie le bloc-vannes (13) pour le fluide comprimé pris sur le frein de roue (9), jusqu'au côté d'aspiration d'une pompe haute pression (17) dont le côté pression est relié à une conduite d'alimentation (19) branchée entre le maître-cylindre (2) et le bloc-vannes (13) sur la conduite de frein (8),
- dans la conduite de frein (8), entre le branchement de la conduite d'alimentation (13) et le maître-cylindre (2) se trouve une vanne d'inversion (21) et partant de celle-ci une conduite de débordement (22) débouchant du côté du maître-cylindre dans la conduite de frein (8) avec une soupape de limitation de pression (23),
- une conduite d'aspiration (26) pour le fluide sous pression est reliée à la conduite de retour (14) et comporte une vanne d'arrêt (27) commutée par la pression régnant dans la conduite de frein (8) entre le maître-cylindre (2) et la vanne d'inversion (21),
- la conduite de retour (14) est branchée entre le bloc-vannes (13) et le branchement de la conduite d'aspiration (26) à la chambre d'accumulation (31) pour le fluide sous pression,
caractérisé par les caractéristiques suivantes :
- la conduite d'aspiration (26) est branchée sur la conduite de frein (8) entre le maître-cylindre (2) et la vanne d'inversion (21),
- dans la conduite de retour (14), entre le branchement de la conduite d'aspiration (26) et la chambre d'accumulation (31) se trouve une soupape anti-retour (32).
